# DEMANDE DE BREVET EUROPEEN

(11) **EP 1 315 051 A1**
(43) Date de publication de la demande: **28.05.2003**
(21) Numéro de dépôt: 01204557.1
(22) Date de dépôt: 26.11.2001
(51) Int. Cl.: G04C 10/00, G04G 1/00, H02J 7/02

(54) **Objet électronique de petites dimensions susceptible d'être porté au poignet**

(71) Demandeur: ETA SA Manufacture Horlogère Suisse, 2540 Grenchen (CH)
(72) Inventeur: Bisig, Martin, 4528 Zuchwil (CH)
(74) Mandataire: Thérond, Gérard Raymond

(57) **Abrégé**

La présente invention concerne un objet portatif tel qu'une pièce d'horlogerie (18) susceptible d'être porté au poignet d'un utilisateur au moyen d'un bracelet, cet objet portatif étant alimenté en énergie électrique par au moins un accumulateur rechargeable pouvant être rechargé par des moyens de charge par induction, ces moyens de charge inductifs comprenant un enroulement primaire (56) et un enroulement secondaire (2), ledit objet portatif étant caractérisé en ce que l'enroulement secondaire (2) est logé dans un brin (16, 26) du bracelet.

## Description

La présente invention concerne un objet électronique tel qu'une pièce d'horlogerie susceptible d'être porté au poignet d'un utilisateur.

Il apparaît actuellement sur le marché des pièces d'horlogerie multifonctions qui permettent à leurs porteurs, non seulement d'accéder à diverses informations horaires, mais également de recevoir et, le cas échéant, d'émettre, par exemple des informations radiodiffusées concernant l'état de la circulation routière, les cours de la bourse ou encore les prévisions météorologiques.

Outre le grand nombre de fonction qu'elles sont capables de remplir, les montres du genre susmentionné présentent la particularité d'être, le plus souvent, fortes consommatrices d'énergie. C'est pourquoi elles sont habituellement alimentées, non pas par des piles jetables dont les capacités de stockage en énergie sont limitées, mais par des accumulateurs qui peuvent être périodiquement rechargés au moyen de chargeurs électriques prévus à cet effet.

La charge des accumulateurs peut se faire via des contacts ohmiques prévus sur la boîte de la montre et au moyen desquels ladite montre multifonction est connectée à son chargeur. Les inconvénients de tels contacts ohmiques sont cependant bien connus. Ils nuisent notamment gravement à l'étanchéité de la montre qu'ils équipent, offrant un passage facile d'accès à l'eau, aux poussières et à l'humidité.

Pour remédier à ces inconvénients, on a recouru à des techniques de charge des accumulateurs par induction. Dans ce cas, le chargeur comprend un enroulement qui constitue le primaire d'un transformateur de charge, tandis que l'enroulement secondaire du transformateur est placé dans le circuit de charge du ou des accumulateurs rechargeables, à l'intérieur de la montre.

La technique de charge par induction permet avantageusement de recharger les accumulateurs de la montre sans contact et sans fil. Elle permet donc de s'affranchir des contacts ohmiques qui sont habituellement prévus pour relier lesdits accumulateurs à un chargeur extérieur. Cette technique impose cependant que la boîte de la montre soit préférentiellement réalisée en matière plastique. En effet, une boîte de montre qui serait réalisée en un matériau métallique réduirait l'efficacité du couplage électromagnétique entre les enroulements primaire et secondaire du transformateur de charge. Pour conserver la même efficacité de charge que celle observée avec une boîte en matière plastique, il faudrait donc, dans le cas d'une boîte métallique, augmenter la fréquence du courant de charge, en courant le risque de se heurter aux normes qui régissent l'exposition de la population aux champs électromagnétiques. Le choix des matériaux qui peuvent être utilisés pour réaliser des montres destinées à être rechargées par induction est donc limité, ce qui constitue un handicap sérieux pour les fabricants horlogers qui éprouvent des difficultés pour pouvoir s'adapter aux évolutions de la mode et de la demande de la clientèle.

La présente invention a pour but de remédier aux inconvénients susmentionnés ainsi qu'à d'autre encore en proposant un objet électronique tel qu'une montre-bracelet dont les accumulateurs peuvent être rechargés par induction de façon simple et en garantissant une charge optimale de ces accumulateurs.

A cet effet, la présente invention concerne un objet portatif tel qu'une pièce d'horlogerie susceptible d'être porté au poignet d'un utilisateur au moyen d'un bracelet, cet objet portatif étant alimenté en énergie électrique par au moins un accumulateur rechargeable pouvant être rechargé par des moyens de charge par induction, ces moyens de charge inductifs comprenant un enroulement primaire et un enroulement secondaire, ledit objet portatif étant caractérisé en ce que l'enroulement secondaire est logé dans le bracelet.

Grâce à ces caractéristiques, la présente invention procure un objet portatif, notamment une montre-bracelet, dont la boîte peut être réalisée en tout type de matériau, ce qui laisse toute liberté aux fabricants horlogers pour s'adapter aux évolutions de la mode ou répondre à des demandes spécifiques émanant de la clientèle. En outre, bien que la montre puisse être réalisée en des matériaux en particulier métalliques, la présente invention permet de conserver tous les avantages liés à la charge d'accumulateurs par induction, à savoir l'absence de tout contact et de fil, ce qui permet de procurer un boîtier exempt de connecteur dont l'étanchéité est ainsi plus facile à garantir.

Selon une caractéristique complémentaire de l'invention, les pistes conductrices formant l'enroulement secondaire sont ménagées sur l'une au moins des faces, et préférentiellement sur les deux faces, d'un substrat isolant.

En effet, le fait de pouvoir disposer d'un nombre important de pistes conductrices pour former l'enroulement secondaire permet avantageusement de réduire la fréquence du courant de charge des accumulateurs, ce qui permet d'éviter tout risque de franchir les valeurs limites en termes d'exposition de la population aux rayonnements électromagnétiques édictées par les normes actuellement en vigueur.

Selon un premier mode de réalisation de l'invention, le substrat isolant sur lequel est déposé l'enroulement secondaire est noyé par moulage dans l'épaisseur d'un bracelet réalisé en un matériau souple tel que du plastique ou un élastomère.

Selon un second mode de réalisation, le substrat isolant sur lequel est déposé l'enroulement secondaire est introduit dans un bracelet conformé en fourreau.

Comme cela a été mentionné dans le préambule de la présente demande de brevet, l'objet portatif selon l'invention est tout particulièrement destiné à capter des informations de type radiodiffusé. A cet effet, il doit être équipé d'une antenne réceptrice. On peut alors avantageusement déposer sur le même substrat isolant à la fois l'enroulement secondaire et cette antenne, ce qui permet de simplifier le procédé de fabrication et donc de réaliser des gains de temps et d'argent.

D'autres caractéristiques et avantages de la présente invention ressortiront plus clairement de la description détaillée qui suit d'un mode de réalisation de l'objet portatif selon l'invention, cet exemple étant donné à titre purement illustratif et non limitatif seulement, en liaison avec les dessins annexés dans lesquels :
- la figure 1 est une vue générale en plan d'un substrat isolant sur lequel est ménagé l'enroulement secondaire;
- la figure 2 est une vue en coupe longitudinale d'un brin d'un bracelet surmoulé autour du substrat isolant portant l'enroulement secondaire;
- la figure 3 est une vue en coupe longitudinale d'un brin d'un bracelet conformé en fourreau dans la cavité intérieur duquel est glissé l'enroulement secondaire;
- la figure 4 est une vue à plus grande échelle de la région entourée d'un cercle sur la figure 3;
- la figure 5 est une vue en plan d'un substrat isolant sur lequel sont disposés un enroulement secondaire et une antenne destinée à capter des informations radiodiffusées, et
- la figure 6 est une vue schématique en perspective d'un chargeur électrique.

La présente invention procède de l'idée générale inventive consistant à disposer l'enroulement secondaire d'un dispositif de charge par induction en un endroit autre que dans le boîtier d'un objet portatif alimenté par des accumulateurs destinés à être rechargés au moyen du dispositif de charge. Ce faisant, on profite pleinement des avantages liés à la charge par induction qui permet notamment d'éviter d'avoir recours à des contacts ohmiques nuisibles à l'étanchéité du boîtier, tout en évitant l'un des seuls problèmes de la charge inductive, à savoir la limitation dans le choix des matériaux pouvant être utilisés pour la fabrication du boîtier.

La présente invention va être décrite en liaison avec une pièce d'horlogerie du type montre-bracelet. Il va de soi que l'invention n'est pas limitée à un tel mode de réalisation et qu'elle peut s'appliquer à tout type d'objet électronique de petites dimensions pouvant être porté par un utilisateur à son poignet au moyen d'un bracelet.

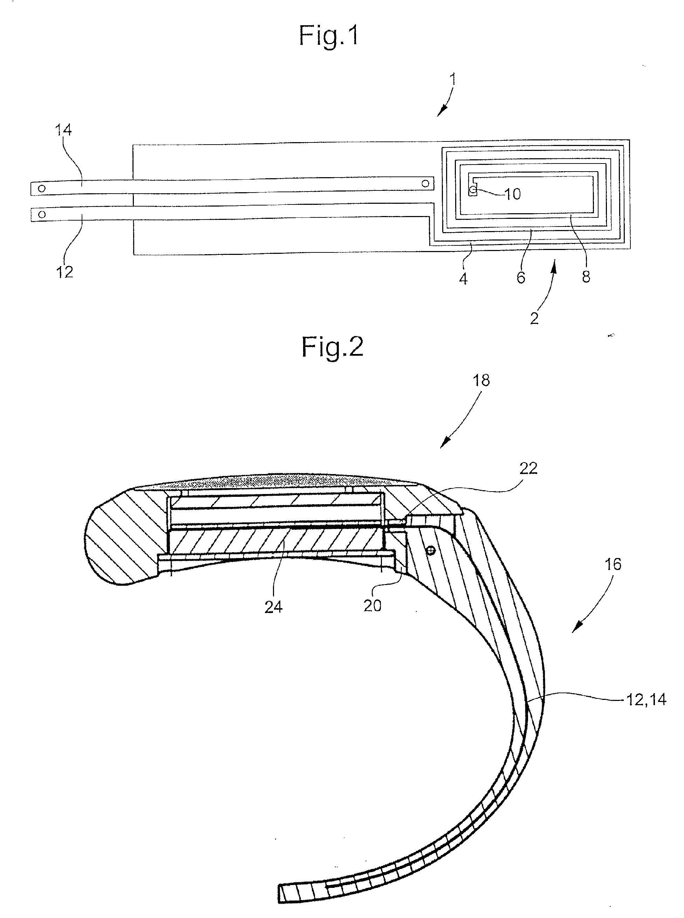

La figure 1 est une vue en plan d'un substrat isolant sur lequel est déposé l'enroulement secondaire. Désigné dans son ensemble par la référence numérique 1, ce substrat se présente sous la forme d'une bande souple réalisée, par exemple en Kapton ®, ou en tout autre matériau isolant présentant la souplesse requise. L'enroulement secondaire 2 est disposé sur l'une au moins des faces, et préférentiellement sur les deux faces du substrat isolant 1. En effet, plus le nombre de spires 4 formant l'enroulement secondaire 2 est élevé, moins la fréquence du courant de charge inductif sera élevée, ce qui permet d'éviter de contrevenir aux normes en vigueur relatives à l'exposition du public aux rayonnements électromagnétiques.

Comme on peut le voir sur la figure 1, l'enroulement secondaire 2 présente un périmètre extérieur constitué par sa spire externe 4 de forme sensiblement rectangulaire. Les autres spires 6 et 8 sont disposées de manière concentrique par rapport à la spire externe 4. Egalement de forme rectangulaire, les spires 6 et 8 sont de dimensions progressivement décroissantes.

Les spires 4 à 8 de l'enroulement secondaire 2 sont déposées sur le substrat isolant 1 par toute technique appropriée telle que, par exemple, par photolithographie. Dans ce cas, une feuille mince d'un matériau conducteur tel que du cuivre est préalablement collée sur la surface du substrat. Cette feuille de matériau conducteur est ensuite revêtue d'une couche d'un vernis photosensible qui va être exposée à un rayonnement lumineux à travers les ouvertures d'un masque reproduisant la forme de l'enroulement secondaire 2 recherchée. Après développement du vernis photosensible, les zones de la feuille de cuivre non recouvertes par ce vernis vont être gravées par attaque chimique. Finalement, le vernis restant est éliminé.

Les spires 4 à 8 ménagées sur la face supérieure du substrat isolant 1 et les spires (non représentées) ménagées sur la face inférieure dudit substrat 1 sont classiquement reliées entre elles par des vias ou trous traversants (également non représentés) situés au-dessous d'une plage de contact 10 prévue à l'extrémité libre de la spire intérieure 8.

Les deux extrémités 12 et 14 de l'enroulement secondaire 2 sont, pour des raisons de commodité, ménagées sur la même face supérieure du substrat isolant 1, la première extrémité 12 étant reliée à la spire externe 4 dudit enroulement secondaire 2, tandis que la seconde extrémité 14 est reliée par l'intermédiaire d'un trou traversant l'épaisseur dudit substrat et métallisé afin de pouvoir être conducteur aux spires ménagées sur la face inférieure de ce substrat 1.

Selon un premier mode de réalisation de l'invention représenté à la figure 2, le substrat 1 et les différentes spires de l'enroulement secondaire 2 qui sont ménagées à sa surface sont surmoulés à l'aide d'un matériau plastique ou élastomère suffisamment souple et résistant pour pouvoir former l'un des brins 16 du bracelet de la montre. Comme on peut le voir à la figure 2, les deux extrémités 12 et 14 de l'enroulement secondaire 2 s'étendent sur pratiquement toute la longueur du brin 16 du bracelet de la montre 18 et pénètrent dans le boîtier 20 de ladite montre 18 par un trou 22. A l'intérieur du boîtier 20 de la montre 18, les extrémités 12 et 14 de l'enroulement secondaire 2 sont fixées sur un circuit imprimé 24 préférentiellement par vissage. Il faut en effet envisager le cas où le bracelet de la montre 18 est usé et doit être remplacé. Dans un tel cas, il est aisé de remplacer le bracelet usagé par un nouveau dans la mesure où les extrémités de l'enroulement secondaire noyé dans ce nouveau bracelet n'auront qu'à être vissées sur le circuit imprimé.

La traversée étanche de la boîte 20 de la montre-bracelet 18 par les extrémités de l'enroulement secondaire ne faisant pas l'objet de la présente demande de brevet, elle ne sera pas décrite ici. Pour ces questions, on pourra se reporter avantageusement à la demande de brevet européen publiée sous le numéro EP 1 033 636 au nom de la Demanderesse.

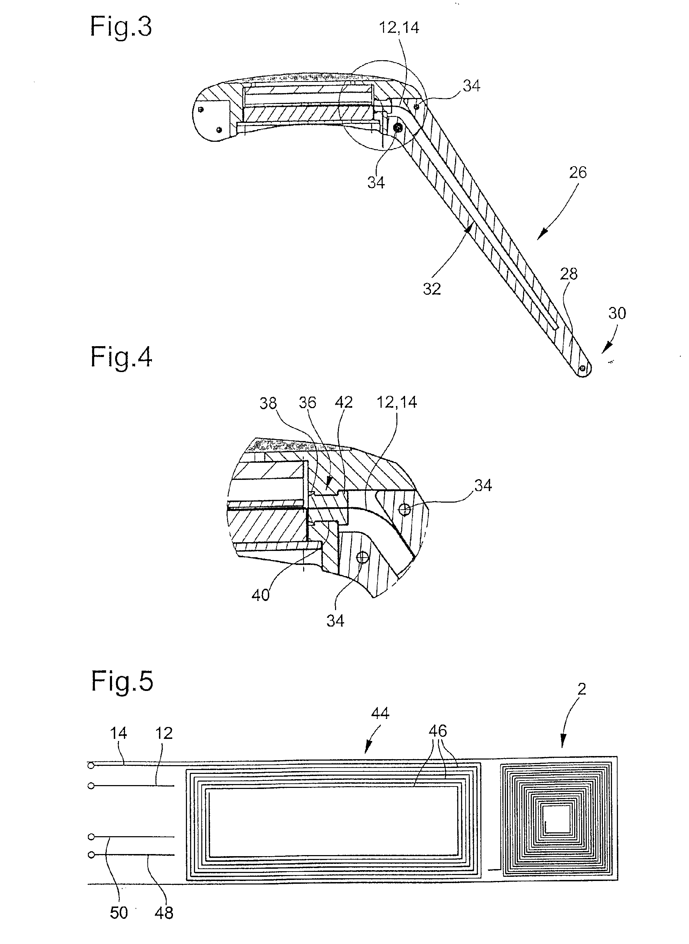

Une autre solution envisageable pour le montage du substrat isolant 1 et des structures conductrices formées à sa surface consiste simplement à glisser celui-ci dans la cavité d'un bracelet conformé en fourreau. Dans ce cas, les extrémités de l'enroulement secondaire peuvent être fixées par soudage ou collage sur le circuit imprimé contenu dans le boîtier de la montre puisque, pour remplacer un bracelet usagé, il suffit d'exercer une légère traction sur celui-ci afin d'extraire le substrat isolant 1. Cette seconde solution est représentée en liaison avec la figure 3 sur laquelle on peut voir que le brin 26 du bracelet de la montre 18 est formé par une bande 28 recourbée à son extrémité 30 et dont les bords longitudinaux peuvent être solidarisés par exemple par thermosoudage ou par collage s'il s'agit d'un bracelet en matière plastique, ou bien cousus dans le cas d'un bracelet en cuir. La bande 28 ainsi pliée en deux délimite une cavité 32 dans laquelle sont glissées les deux extrémités 12 et 14 de l'enroulement secondaire 2. Comme il n'est pas nécessaire, dans ce cas, d'ouvrir la boîte 20 de la montre 18 pour déconnecter les extrémités 12 et 14 du circuit imprimé 24 lorsqu'on souhaite changer de bracelet, lesdites extrémités 12 et 14 de l'enroulement secondaire peuvent être fixées de manière permanente sur ledit circuit imprimé 24, notamment par soudage. Les deux parties de la bande 28 recourbée pour former le brin 26 sont fixées au boîtier 20 de la montre 18 au moyen de barrettes 34. Un joint d'étanchéité 36 est moulé sur les extrémités 12 et 14 de l'enroulement secondaire 2. Ce joint présente une tête 38 dont le diamètre est légèrement supérieur à celui du trou 40 ménagé dans le boîtier 20 dans lequel ledit joint 36 est destiné à être engagé. En traversant le trou 40, la tête 38 du joint 36, réalisée en un matériau élastomère, se comprime et reprend sa forme initiale une fois sortie dudit trou 40, assurant l'immobilisation dudit joint 36 grâce à une collerette 42 que ce joint 36 présente à son autre extrémité, à une distance de la tête 38 égale à la longueur du trou 40 (voir figure 4).

La montre-bracelet 18 selon l'invention est destinée, en particulier, à capter des informations diffusées par ondes-radio. A cet effet, elle doit comporter une antenne qui, comme cela est visible sur la figure 5, peut être avantageusement ménagée sur le même substrat isolant 1 que l'enroulement secondaire 2. Désignée par la référence numérique 44, cette antenne est formée de plusieurs spires concentriques 46, par exemple de forme rectangulaire, et comprend deux extrémités 48 et 50. Ces extrémités 48 et 50 de l'antenne 44 peuvent être indépendantes des extrémités 12 et 14 de l'enroulement secondaire, ou bien être couplées avec ces dernières. Dans ce dernier cas, les signaux électriques acheminés par l'antenne et par l'enroulement secondaire seront découplés dans le boîtier 20 de la montre 18 à l'aide de moyens de découplage capacitifs.

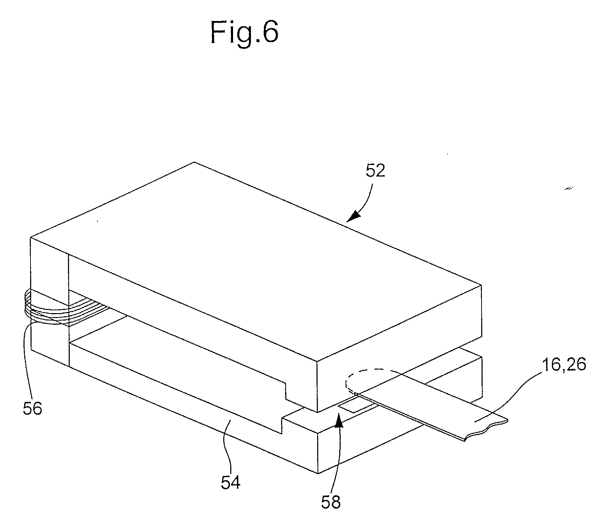

La figure 6 est une représentation schématique du chargeur électrique destiné à recharger les accumulateurs de la montre 18. Désigné dans son ensemble par la référence numérique 52, ce chargeur se compose principalement d'un noyau en ferrite 54 autour duquel est enroulé l'enroulement primaire 56. Pour recharger les accumulateurs de la montre 18, il suffit de disposer le brin 16 ou 26 renfermant dans son épaisseur l'enroulement secondaire 2 dans l'entrefer 58 formé par le noyau 54.

Il va de soi que l'invention n'est pas limitée aux modes de réalisation qui viennent d'être décrits, et que diverses modifications et variantes simples peuvent être envisagées sans sortir du cadre de la présente invention.

## Revendications

1. Objet portatif tel qu'une pièce d'horlogerie (18) susceptible d'être porté au poignet d'un utilisateur au moyen d'un bracelet, cet objet portatif étant alimenté en énergie électrique par au moins un accumulateur rechargeable pouvant être rechargé par des moyens de charge par induction, ces moyens de charge inductifs comprenant un enroulement primaire (56) et un enroulement secondaire (2), ledit objet portatif étant **caractérisé en ce que** l'enroulement secondaire (2) est logé dans un brin (16, 26) du bracelet.

2. Objet portatif selon la revendication 1, **caractérisé en ce que** les spires conductrices (4, 6, 8) formant l'enroulement secondaire (2) sont ménagées sur l'une au moins des faces d'un substrat isolant (1).

3. Objet portatif selon la revendication 2, **caractérisé en ce que** l'enroulement secondaire (2) est constitué par sa spire externe (4) de forme rectangulaire, les autres spires (6, 8) étant disposées de manière concentrique par rapport à la spire externe (4), leur dimensions décroissant progressivement.

4. Objet portatif selon l'une quelconque des revendications 2 ou 3, **caractérisé en ce que** le substrat isolant (1) sur lequel est ménagé l'enroulement secondaire (2) est noyé dans l'épaisseur d'un brin (16) du bracelet réalisé en un matériau souple.

5. Objet portatif selon l'une quelconque des revendications 2 ou 3, **caractérisé en ce que** le substrat isolant (1) sur lequel est ménagé l'enroulement secondaire (2) est introduit dans un brin (26) d'un bracelet conformé en fourreau.

6. Objet portatif selon la revendication 5, **caractérisé en ce qu'**un joint d'étanchéité (36) est moulé sur les deux extrémités libres (12, 14) que comprend l'enroulement secondaire (2), ce joint présentant une tête (38) dont le diamètre est supérieur à celui d'un trou (40) ménagé dans le boîtier (20) de l'objet portatif ainsi qu'une collerette (42) qui assure son immobilisation axiale.

7. Objet portatif selon l'une quelconque des revendications 4 à 6, **caractérisé en ce que** l'enroulement secondaire (2) comprend deux extrémités libres (12, 14) qui sont vissées, collées ou soudées sur un circuit imprimé (24) renfermé dans le boîtier (20) de l'objet portatif.

8. Objet portatif selon l'une quelconque des revendications 2 à 7, **caractérisé en ce qu'**une antenne (44) est ménagée sur le même substrat isolant (1) que l'enroulement secondaire (2).

9. Objet portatif selon la revendication 8, **caractérisé en ce que** l'enroulement secondaire (2) et l'antenne (44) sont couplés, des moyens de découplage capacitifs étant prévus dans l'objet portatif afin de découpler les signaux électriques acheminés par ledit enroulement secondaire (2) et par ladite antenne (44) respectivement.

10. Objet portatif selon l'une quelconque des revendications 2 à 10, **caractérisé en ce que** l'enroulement secondaire (2) est structuré par photogravure à la surface du substrat isolant (1).
